# DEMANDE DE BREVET EUROPEEN

(11) **EP 1 727 269 A2**
(43) Date de publication de la demande: **29.11.2006**
(21) Numéro de dépôt: 06290501.3
(22) Date de dépôt: 30.03.2006
(51) Int. Cl.: H02P 1/00, H02P 3/00

(54) **Groupe motopompe à détection du type de courant**

(30) Priorité: 27.05.2005 FR 0505374
(71) Demandeur: KSB S.A.S, 92230 Gennevilliers (FR)
(72) Inventeur: Berthon, Jacques, 36250 Niherne (FR); Symoens, Louis, 59155 Faches-Thumesnil (FR)
(74) Mandataire: Eidelsberg, Olivier Nathan

(57) **Abrégé**

Dans ce groupe motopompe, au circuit (7) de commande du moteur (M) sont adjoints des moyens (11, 14) de détection d'un premier et d'un deuxième type de courant passant dans les fils (1, 2) d'alimentation et le circuit (7) de commande commande en fonction de ces types de courant la marche ou l'arrêt du moteur (M).

## Description

La présente invention se rapporte aux groupes motopompes et plus particulièrement à ceux destinés à servir de pompes de relevage dans une cuve. On connaît déjà un groupe motopompe comprenant une pompe entraînée par un moteur. Le moteur est commandé par un circuit de commande alimenté par deux fils d'alimentation. Dans un mode de réalisation préféré, le circuit de commande est intégré au groupe motopompe. Un capteur de niveau haut, lui aussi intégré à la pompe, envoie un signal au circuit de commande lorsque le niveau du liquide dans la cuve atteint ou dépasse un niveau donné. Le circuit de commande met en marche le moteur de manière à vider la cuve. Ce groupe motopompe à circuit de commande et capteur de niveau haut intégrés est d'un montage et d'une mise en place très facilités, mais présente l'inconvénient que l'on ne peut pas régler le niveau donné à partir duquel le groupe motopompe se met en marche pour vider la cuve, sauf à prévoir un capteur de niveau haut supplémentaire et indépendant du groupe motopompe que l'on peut déplacer à volonté et mettre au niveau que l'on souhaite et un câblage allant de ce dernier capteur au circuit de commande. Ce câblage serait coûteux et nécessiterait de prévoir des étanchéités supplémentaires sur la pompe.

L'invention remédie à ces inconvénients par un groupe motopompe pouvant être notamment à capteur de niveau haut intégré et à circuit de commande du moteur intégré, mais qui permet sans câblage supplémentaire de régler un niveau donné de liquide dans la cuve à partir duquel la pompe se met en marche pour vider la cuve.

Au US 2003/174450, il est adjoint au circuit de commande des moyens de détection d'un premier type de courant et d'un deuxième type de courant différent du premier passant dans les fils et le circuit de commande commande la marche ou l'arrêt du moteur en fonction de ces types de courant.

L'invention a pour objet un groupe motopompe tel que défini à la revendication 1.

Les deux types de courant les plus utilisés sont un courant alternatif et un courant continu, mais on pourrait, bien entendu, prévoir aussi des courants alternatifs de fréquences différentes ou d'autres courants différents par le rapport de cycle ou autre.

Comme le circuit de commande est doté de moyens lui permettant de distinguer entre deux types de courant et de commander le moteur selon cette distinction, il est maintenant possible sans utiliser de câblage supplémentaire et en faisant passer un premier type de courant ou un deuxième type de courant selon ce qui est souhaité, de faire en sorte que le circuit de commande mette le moteur du groupe motopompe en marche ou à l'arrêt en utilisant pour cela les deux fils d'alimentation existants. On utilise maintenant la modification de courant pour interpréter l'état d'un capteur de niveau.

Suivant le mode de réalisation le plus simple, les moyens de détection d'un premier type et d'un deuxième type de courant différent du premier type comprennent une première diode montée dans le sens direct dans une première branche de l'un des fils au circuit de commande et une deuxième diode montée dans le sens inverse ou un condensateur monté dans une deuxième branche allant du même un des fils d'alimentation au circuit de commande.

Suivant un perfectionnement très préféré, le circuit de commande est relié à un capteur de niveau haut et comprend des moyens pour transformer le capteur de niveau haut en un capteur de niveau bas lorsque les moyens de détection détectent le deuxième type de courant. Les moyens pour transformer le capteur de niveau haut en un capteur de niveau bas comportent, par exemple, un logiciel à deux logigrammes, l'un des logigrammes étant validé par un courant du premier type et l'autre par un courant du deuxième type et modifiant le fonctionnement du capteur de niveau qui, de préférence, est intégré.

L'invention vise aussi, de manière indépendante, un capteur de niveau haut (bas) transformable en un capteur de niveau bas (haut).

Suivant un perfectionnement, le groupe motopompe, qui a une prise d'alimentation en courant du moteur d'où partent les deux fils d'alimentation, est caractérisé par une diode montée dans le sens direct du même un des fils d'alimentation et pouvant être court-circuitée par une ligne de court-circuit dans laquelle est monté un contact d'un relais commandé par un deuxième capteur de niveau haut. Ce deuxième capteur de niveau haut peut être placé à n'importe quel niveau souhaité dans la cuve par l'utilisateur. Lorsque le contact du relais est ouvert, un courant redressé par la diode passe dans le fil d'alimentation. Lorsque le contact du relais est fermé et lorsque la diode est ainsi court-circuitée, c'est la tension alternative du réseau qui arrive au circuit de commande du moteur. Lorsque le niveau de l'eau dépasse le niveau de consigne du deuxième capteur de niveau, le relais se ferme et le deuxième courant alternatif met le moteur en marche par l'intermédiaire du circuit de commande. Le groupe motopompe commence à vider la cuve. Pour que le contact du relais reste fermé, il est prévu un élément de détection de la présence d'un courant assez intense dans l'un des fils d'alimentation pour maintenir le moteur en marche et un circuit de maintien du relais en position fermée tant que l'élément de détection détecte la présence de ce courant.

Lorsque le niveau du liquide dans la cuve atteint le niveau de consigne du premier capteur de niveau qui est maintenant devenu un capteur de niveau bas, ce capteur envoie au circuit de commande du moteur un signal d'arrêt. Le circuit de commande arrête le moteur du groupe motopompe. Le courant dans le fil d'alimentation ayant diminué, le contact du relais s'ouvre. On est revenu dans la position de départ.

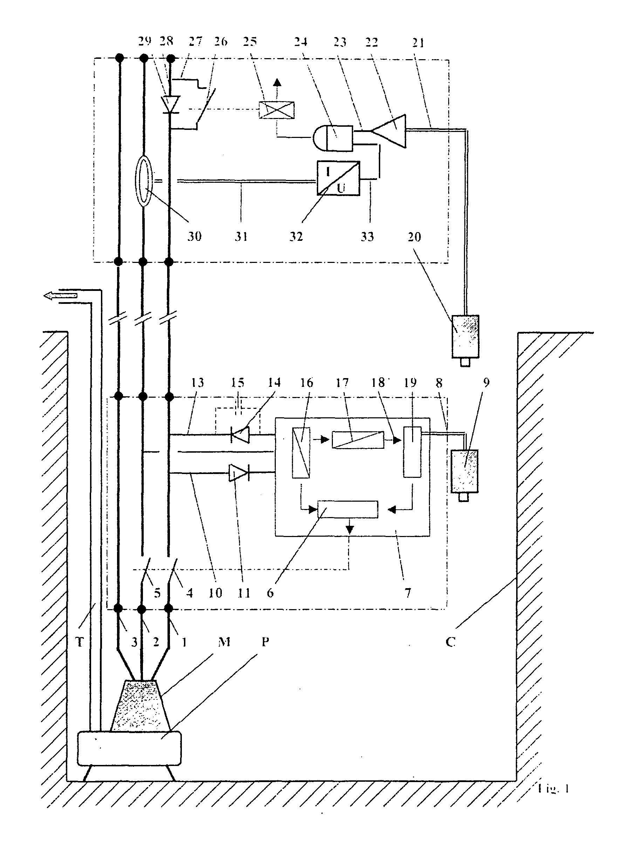

La Figure unique du dessin annexé est un schéma du circuit électrique du groupe motopompe suivant l'invention.

Dans une cuve C est monté un groupe motopompe se composant d'un moteur M et d'une pompe P ayant une tubulure T de refoulement et une volute d'aspiration. Du moteur M part un premier fil 1 conducteur d'alimentation, un deuxième fil 2 conducteur d'alimentation et une ligne 3 de terre. La ligne 1 a un contact 4 de commande. La ligne 2 a un contact 5 de commande. Les contacts 4 et 5 sont commandés par un relais 6 faisant partie d'un circuit 7 de commande relié par une ligne 8 à un capteur 9 de niveau intégré à la pompe.

Le circuit de commande est relié par une première branche 10 sur laquelle est montée dans le sens direct une première diode 11 au fil 1 d'alimentation. Le circuit 7 de commande est relié par une deuxième branche 13 sur laquelle est montée dans le sens inverse une deuxième diode 14 au fil 1 d'alimentation. On a représenté en tirets que la diode 14 peut être remplacée par un condensateur 15.

Les deux branches 10 et 13 arrivent dans un discriminateur 16 permettant de distinguer si du courant continu arrive seulement par la première branche 10 ou si du courant alternatif arrive par les deux branches 10 et 13. Dans le premier cas, le discriminateur 16 choisit dans un logiciel un logigramme 17 qui est transmis par une ligne 18 à un circuit 19 sélecteur. Le circuit sélecteur 19 envoie, dans ce cas, un signal par la ligne 8 au capteur 9 de niveau pour le transformer en capteur de niveau bas, à savoir un capteur qui réagit lorsque le niveau de l'eau s'abaisse jusqu'au niveau de consigne du capteur. Dans l'autre cas, le discriminateur 16 envoie au logiciel 17 l'ordre d'envoyer par la ligne 18 un autre logigramme au circuit 19 sélecteur, de sorte que celui-ci maintient le capteur 9 de niveau en tant que capteur de niveau haut.

Dans le haut de la cuve est monté un capteur 20 de niveau haut que l'utilisateur peut placer au niveau qui lui semble bon. Ce capteur 20 est relié par une ligne 21 à un amplificateur 22, lequel est relié par une ligne 23 à une porte 24 OU dont la borne de sortie est reliée à un relais 25 ayant un contact 26 qui peut venir fermer un circuit 27 de court-circuitage du tronçon 28 du fil 1, tronçon sur lequel est montée une diode 29 dans le sens direct. Sur le fil 2, mais ce pourrait être aussi sur le fil 1, est monté un tore 30 de détection de la présence d'un courant alternatif suffisamment intense pour témoigner que le moteur M est en marche. Ce courant est envoyé par une ligne 31 à un convertisseur 32 courant/tension dont la sortie est envoyée à la deuxième borne 33 d'entrée de la porte 24 OU.

Le groupe motopompe fonctionne de la manière suivante.

On suppose que l'on met pour la première fois le groupe motopompe dans la cuve C, alors que la cuve est vide. Le circuit 7 de commande reçoit du courant continu du fil 1 d'alimentation puisque le contact 26 est ouvert et que la tension du réseau est redressée par la diode 29. Par l'intermédiaire des éléments 16, 17, 18, 19 et 8, il est fait en sorte que le capteur 9 de niveau soit un capteur de niveau bas.

L'eau monte dans la cuve C, elle franchit sans provoquer de modification le niveau de consigne du capteur 9 puisque celui-ci est un capteur de niveau bas et atteint le capteur 20 de niveau haut. Celui-ci envoie par les éléments 21, 22 et 23 un signal à la porte 24 OU qui commande le relais 25 de façon à appliquer le contact 26 en sorte que le circuit 27 de court-circuit est fermé et qu'il passe maintenant dans le fil 1 d'alimentation un courant alternatif. Ce courant alternatif, qui passe dans les deux branches 10 et 13, à la différence du courant continu qui ne passait que dans la branche 10, est détecté par le circuit 7 de commande, lequel actionne le relais 6 de manière à fermer les fils 1 et 2 par les contacts 4 et 5. Le moteur M est alimenté. La pompe démarre. Le tore 30 détecte un courant suffisamment intense pour montrer que le moteur M fonctionne et transmet cette information par la ligne 31 au convertisseur 32 qui envoie le signal par la borne 33 d'entrée à la porte 24 OU en sorte que le contact 26 du relais 25 maintient fermé le circuit 27 de court-circuit.

Le niveau dans la cuve continue à s'abaisser jusqu'à atteindre le niveau de consigne prescrit par le capteur 9 de niveau qui est maintenant un capteur de niveau bas. Dès que ce niveau de consigne est atteint, le capteur 9 de niveau bas donne, par l'intermédiaire de la ligne 8 et du circuit 19 sélecteur, l'ordre au relais 6 d'ouvrir les contacts 4 et 5. Le moteur M de la pompe P s'arrête. On est revenu à la position initiale.

Si l'on entend se passer du capteur 20 de niveau, on se dispense aussi de l'amplificateur 22, de la porte 24, du convertisseur 32 et, si l'on veut, du relais 25 ou en tout cas on maintient le contact 26 de ce relais fermé ou l'on supprime la diode 29, en sorte que l'on se retrouve avec une pompe habituelle alimentée en courant alternatif par le secteur et dans laquelle le capteur 9 de niveau sert de capteur de niveau haut.

## Revendications

1. Groupe motopompe comprenant une pompe (P) entraînée par un moteur (M) commandé par un circuit (7) de commande qui est alimenté par deux fils (1, 2) d'alimentation, et auquel sont adjoints des moyens (11, 14) de détection d'un premier type de courant et d'un deuxième type de courant différent du premier passant dans les fils (1, 2) d'alimentation, le circuit (7) de commande commandant en fonction de ces types de courant la marche ou l'arrêt du moteur (M), **caractérisé par** un capteur (20) de niveau et par des moyens (21, 22, 23, 24, 25) de changement du type de courant en fonction du signal envoyé par le capteur (20).

2. Groupe motopompe suivant la revendication 1, **caractérisé en ce que** le circuit (7) de commande est intégré au groupe motopompe.

3. Groupe motopompe suivant la revendication 1 ou 2, **caractérisé en ce que** les moyens de détection comprennent une première diode (11) montée dans le sens direct dans une première branche (10) allant de l'un des fils (1) au circuit (7) de commande et une deuxième diode (14) montée dans le sens inverse ou un condensateur (15) monté dans une deuxième branche (13) allant du même un des fils (1) d'alimentation au circuit (7) de commande.

4. Groupe motopompe suivant l'une des revendications 1 à 3, **caractérisé en ce que** le circuit (7) de commande est relié à un capteur (9) de niveau haut et comprend des moyens (16 à 19) pour transformer le capteur (9) de niveau haut en un capteur de niveau bas lorsque les moyens (11, 14) de détection détectent le deuxième type de courant.

5. Groupe motopompe suivant l'une des revendications 1 à 4, ayant une prise d'alimentation en courant du moteur (M) d'où partent les deux fils (1, 2) d'alimentation, **caractérisé en ce qu'**une diode (29) montée dans le sens direct dans le même un des fils (1) d'alimentation et pouvant être court-circuitée par une ligne (27) de court-circuit dans laquelle est monté un contact (26) d'un relais (25) commandé par un deuxième capteur (20) de niveau haut.

6. Groupe motopompe suivant la revendication 5, **caractérisé par** un élément (30) de détection de la présence d'un courant assez intense dans l'un des fils (2) d'alimentation pour que le moteur (M) soit en marche et un circuit (32, 33, 24) de maintien du relais (25) en position fermée tant que l'élément (30) de détection détecte la présence de ce courant.
